# EUROPEAN PATENT APPLICATION

(11) **EP 4 813 808 A1**
(43) Date of publication of application: **30.09.2026**
(21) Application number: 25220613.1
(22) Date of filing: 04.12.2025
(51) Int. Cl.: B62D 15/02, B60W 30/06

(54) **VEHICLE PERFORMING AUTONOMOUS PARKING FUNCTION AND CONTROL METHOD THEREOF**

(30) Priority: 25.03.2025 KR 20250038068
(71) Applicant: Hyundai Mobis Co., Ltd., Gangnam-gu Seoul 06141 (KR)
(72) Inventor: KIM, Seung Hyun, 16891 Yongin-si (KR)
(74) Representative: Vossius & Partner Patentanwälte Rechtsanwälte mbB

(57) **Abstract**

A vehicle (100) for performing autonomous parking function, a method therefor, and a system therefor are provided. The vehicle (100) includes a sensor (110) to determine driver's vehicle operation information and vehicle behavior based on the vehicle operation information, and a controller (120) to determine the driver's driving pattern using information obtained through the sensor (110) based on usage frequency of an autonomous parking function that controls a parking process without the driver's intervention, and adjust vehicle control parameters for the autonomous parking function based on the determined pattern.

(Figure 1)

## Description

### 1. Field

The present disclosure relates to a vehicle configured to perform a customized autonomous parking function reflecting a driver's driving tendency and a control method thereof.

### 2. Description of the Related Art

Recently, vehicles equipped with autonomous driving and autonomous parking functions have been developed and distributed due to advances in automotive technology. In vehicles equipped with autonomous parking function, the vehicle can perform parking by itself without direct operation of the driver.

When a driver operates a specific switch or inputs an execution command in a vehicle equipped with autonomous parking function, the vehicle system can detect the surrounding environment to search for available parking spaces and set an optimal parking route to the corresponding space. Thereafter, the vehicle can operate in a manner of automatically moving to the parking space along the set route, and then performing alignment and stop operations to complete parking.

However, one of the reasons why the autonomous parking function is not yet universally recognized is the driver's anxiety about unpredictable operations that may occur during the autonomous parking process. Such anxiety may increase when the vehicle operates the autonomous parking function differently from the driver's usual driving tendency.

Additionally, the parking method performed by the autonomous parking function may be different from the method that the driver usually prefers. For example, the autonomous parking function may perform reverse parking considering the driver's convenience of leaving the parking space, but a driver who frequently uses the trunk may prefer forward parking.

The matters described as the above background art are only for enhancing understanding of the background of the present disclosure, and should not be accepted as acknowledging that they correspond to prior art already known to those having ordinary knowledge in this technical field.

### SUMMARY

The present disclosure relates to a vehicle configured to perform an autonomous parking function reflecting a driver's driving tendency and a method for controlling the same, in order to provide a reliable autonomous parking function.

The technical problems to be achieved in the present disclosure are not limited to the technical problems mentioned above, and other technical problems not mentioned will be clearly understood by those having ordinary knowledge in the technical field belonging to the present disclosure from the description below.

In a general aspect, a vehicle for performing autonomous parking function, includes: a sensor configured to determine driver's vehicle operation information and vehicle behavior based on the vehicle operation information; and a controller configured to determine the driver's driving pattern using information obtained through the sensor based on usage frequency of an autonomous parking function that controls a parking process without the driver's intervention, and adjust vehicle control parameters for the autonomous parking function based on the determined pattern.

The controller may be further configured to adjust the vehicle control parameters to approach the determined pattern based on the autonomous parking function usage frequency being below a predetermined criterion.

The controller may be further configured to maintain the vehicle control parameters based on the autonomous parking function usage frequency exceeding a predetermined criterion.

The vehicle control parameters may include at least one of steering control speed of the vehicle, magnitude of driving and braking control torque, an upper limit value of the vehicle speed during driving, parking type, a lower limit value of a distance between the vehicle and surrounding objects at each parking stage, a lower limit value of a size of a parking space for the vehicle, or any combination thereof.

The vehicle operation information may include at least one of speed of the vehicle, acceleration of the vehicle, brake usage frequency of the driver, or information on steering operation patterns of the driver, or any combination thereof.

The controller may be further configured to control the adjusted vehicle control parameters to be integrated with personalization settings of the vehicle for the driver.

The controller may be further configured to control the autonomous parking function based on the adjusted vehicle control parameters.

In another general aspect, a method of controlling autonomous parking function, includes: determining, by a controller, the driver's driving pattern using information obtained through a sensor which determines driver's vehicle operation information and vehicle behavior based on usage frequency of an autonomous parking function that controls a parking process without the driver's intervention; and adjusting, by the controller, vehicle control parameters for the autonomous parking function based on the determined pattern.

The adjusting of the vehicle control parameters may include adjusting, by the controller, the vehicle control parameters to approach the determined pattern based on the autonomous parking function usage frequency being below a predetermined criterion.

The adjusting of the vehicle control parameters may include maintaining, by the controller, the vehicle control parameters based on the autonomous parking function usage frequency exceeding a predetermined criterion.

In yet another general aspect, a system for controlling autonomous parking function of a vehicle, includes: a sensor configured to obtain information based on usage frequency of an autonomous parking function that controls a parking process without the driver's intervention, determine information related to a vehicle operation of a driver, and determine vehicle behavior based on the determined information; and a controller configured to determine a driving pattern of the driver by using the information obtained through the sensor, and adjust vehicle control parameters for the autonomous parking function based on the determined pattern.

The controller may be further configured to adjust the vehicle control parameters to approach the determined pattern based on the autonomous parking function usage frequency being below a predetermined criterion.

The controller may be further configured to maintain the vehicle control parameters based on the autonomous parking function usage frequency exceeding a predetermined criterion.

The vehicle control parameters may include at least one of steering control speed of the vehicle, magnitude of driving and braking control torque, an upper limit value of the vehicle speed during driving, parking type, a lower limit value of a distance between the vehicle and surrounding objects at each parking stage, or a lower limit value of a size of a parking space for the vehicle, or any combination thereof.

The vehicle operation information may include at least one of speed of the vehicle, acceleration of the vehicle, brake usage frequency of the driver, or information on steering operation patterns of the driver, or any combination thereof.

The controller may be further configured to control the adjusted vehicle control parameters to be integrated with personalization settings of the vehicle for the driver.

The controller may be further configured to control the autonomous parking function based on the adjusted vehicle control parameters.

The effects obtainable from the present disclosure are not limited to the effects mentioned above, and other effects not mentioned will be clearly understood by those having ordinary knowledge in the technical field belonging to the present disclosure from the description below.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 shows an example of a vehicle configuration configured to perform an autonomous parking function according to one embodiment of the present disclosure;
FIG. 2 shows a flowchart for adjusting control parameters of an autonomous parking function according to one embodiment of the present disclosure;
FIG. 3 illustrates an example of parallel parking among parking types according to one embodiment of the present disclosure;
FIGS. 4 to 6 show an example of a process in which a vehicle performs forward parking during parallel parking according to one embodiment of the present disclosure;
FIGS. 7 to 9 show an example of a process in which a vehicle performs reverse parking during parallel parking according to one embodiment of the present disclosure;
FIG. 10 illustrates an example of perpendicular parking among parking types according to one embodiment of the present disclosure;
FIGS. 11 to 13 show an example of a process in which a vehicle performs forward parking during perpendicular parking according to one embodiment of the present disclosure;
FIGS. 14 to 16 show an example of a process in which a vehicle performs reverse parking during perpendicular parking according to one embodiment of the present disclosure;
FIG. 17 shows an example of an environmental configuration in which a vehicle retrieves control parameters of an autonomous parking function set for each individual from an external server according to one embodiment of the present disclosure;
FIG. 18 shows an example of a form for inputting an id and password for connecting to a Connected Car Service through a display according to one embodiment of the present disclosure; and
FIG. 19 shows an example of a form for guiding whether to replace control parameters of an autonomous parking function with adjusted parameters through a display according to one embodiment of the present disclosure.

### DETAILED DESCRIPTION

Hereinafter, embodiments disclosed in the present specification will be described in detail with reference to the accompanying drawings, but the same or similar components are assigned the same reference numerals regardless of drawing numerals, and redundant descriptions thereof will be omitted. The suffixes "module" and "unit" for components used in the following description are given or used interchangeably considering only the ease of writing the specification, and do not have meanings or roles that are distinct from each other. In addition, in describing the embodiments disclosed in the present specification, when it is determined that a detailed description of related known technology may obscure the gist of the embodiments disclosed in the present specification, the detailed description will be omitted. In addition, the accompanying drawings are only for easy understanding of the embodiments disclosed in the present specification, and the technical idea disclosed in the present specification is not limited by the accompanying drawings, and should be understood to include all changes, equivalents, and substitutes included in the spirit and technical scope of the present disclosure.

Terms including ordinal numbers such as first, second, etc., may be used to describe various components, but the components are not limited by the terms. The terms are used only for the purpose of distinguishing one component from another component.

When a component is referred to as being "connected" or "connected" to another component, it should be understood that it may be directly connected or connected to the other component, but other components may exist in between. On the other hand, when a component is referred to as being "directly connected" or "directly connected" to another component, it should be understood that no other components exist in between.

The singular expression includes the plural expression unless the context clearly indicates otherwise.

In the present specification, terms such as "comprise" or "have" are intended to designate that features, numbers, steps, operations, components, parts, or combinations thereof described in the specification exist, and should be understood as not excluding in advance the existence or possibility of addition of one or more other features, numbers, steps, operations, components, parts, or combinations thereof.

In addition, Unit or Control Unit included in the names of Motor Control Unit (MCU), Hybrid Control Unit (HCU), etc., are merely terms widely used for naming controllers that control vehicle-specific functions, and do not mean generic function units. For example, each controller may include a communication device that communicates with other controllers or sensors to control the functions in charge, a memory that stores operating systems, logic commands, input/output information, etc., and one or more processors that perform judgments, calculations, decisions, etc. necessary for controlling the functions in charge.

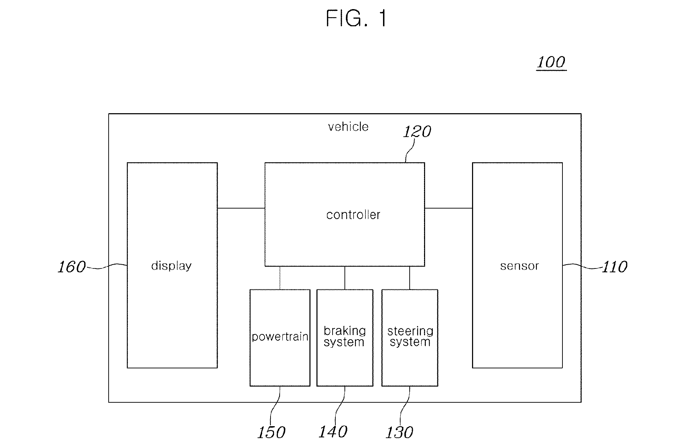

FIG. 1 shows an example of a vehicle configuration configured to perform an autonomous parking function according to one embodiment of the present disclosure.

Referring to FIG. 1, vehicle 100 according to one embodiment of the present disclosure may include sensor 110, controller 120, steering system 130, braking system 140, powertrain 150, and display 160. Hereinafter, each component will be described in more detail.

Sensor 110 may detect driver's vehicle operation information and vehicle behavior based thereon. For example, in one embodiment of the present disclosure, sensor 110 may include a pedal position sensor, brake pressure sensor, steering angle sensor, speed sensor, and the like. Sensor 110 may detect usage frequency, operation depth, operation speed, release amount, and pressure intensity of the pedal when the driver operates the accelerator or brake pedal. In addition, when the vehicle's traveling direction is changed, the driver's steering input may be detected to measure the steering wheel's rotation angle and steering direction. Furthermore, sensor 110 may detect the current gear position of the transmission when the driver operates the shift lever. Along with this, sensor 110 may measure vehicle behavior, for example, vehicle speed and acceleration in real time.

Sensor 110 may also detect surrounding environment information of the vehicle. For example, in one embodiment of the present disclosure, sensor 110 may include a Light Detection And Ranging (LiDAR) sensor, ultrasonic sensor, radar sensor, and camera. Sensor 110 may detect the presence of obstacles around the vehicle, and when obstacles exist, may measure the separation distance between the corresponding obstacle and the vehicle. In addition, sensor 110 may also perform the role of detecting surrounding vehicles and parking spaces, and may be utilized to analyze the size of a specific parking space to determine whether the vehicle can be parked. Such determination may be performed by controller 120, and specific details thereof will be described later.

Controller 120 may collect data from sensor 110 and analyze it to control major functions of the vehicle. For example, in one embodiment of the present disclosure, controller 120 may collect driver's vehicle operation information and environment information from sensor 110, and determine the driver's driving pattern based thereon. Controller 120 may adjust control parameters of the autonomous parking function based on the determined driver's driving pattern. Parameters necessary for optimizing the autonomous parking function may include steering control speed of the vehicle, magnitude of driving and braking control torque, maximum vehicle speed during driving, parking type, minimum distance between the vehicle and surrounding objects at each parking stage, and minimum size of parking space.

Controller 120 may compare the usage frequency of the vehicle's autonomous parking function with a predetermined criterion to determine whether it is necessary to adjust one or more control parameters of the autonomous parking function, and accordingly determine whether to adjust the corresponding parameters. Specifically, controller 120 may adjust vehicle control parameters for the autonomous parking function to approach the driver's driving pattern determined based on information received from sensor 110 when the usage frequency of the vehicle's autonomous parking function is below a predetermined criterion.

The driver's driving pattern may be an important factor affecting parking type selection. For example, parking types may include forward parking and reverse parking. Forward parking is a method of first entering the front part of the vehicle into the parking space, and then reversing as necessary to adjust the final position. On the other hand, reverse parking is a method of first entering the rear part of the vehicle into the parking space, and then moving forward again to adjust the final position. Therefore, when controlling the autonomous parking function, controller 120 may analyze whether the driver first enters the front part or the rear part into the parking space when usually parking the vehicle, and automatically select and apply a parking type suitable for the driver's parking habits.

When performing the autonomous parking function, controller 120 may search for parking spaces, and decide to enter when the searched space is of sufficient size to park the vehicle. At this time, whether the searched parking space is of sufficient size may not simply be whether it is larger than the vehicle's footprint by a certain ratio, but whether it is acceptable to the driver may be important. In addition, whether it is acceptable to the driver may be a concept that includes clearance gap with surrounding objects (for example, surrounding vehicles) in movement during the parking process, and clearance gap with surrounding objects after parking completion (for example, considering door or tail gate opening).

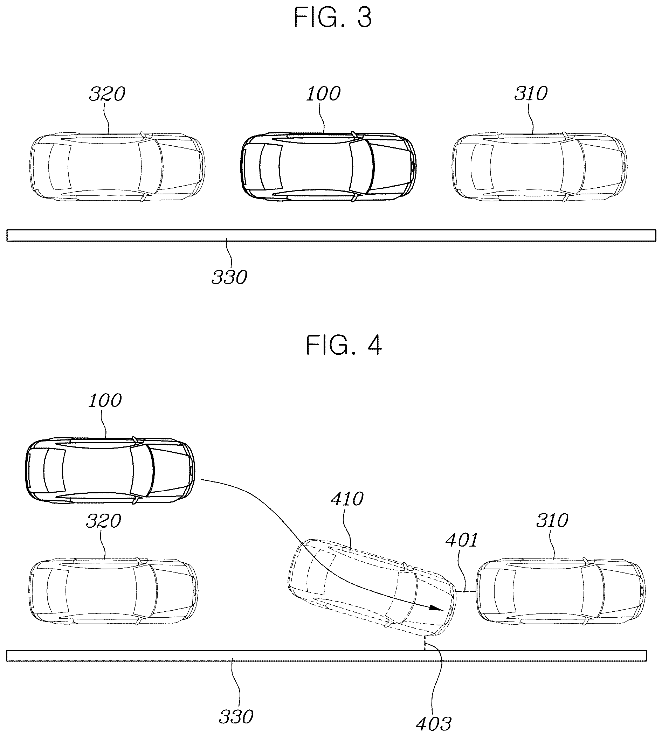

For example, both forward parking and reverse parking have the possibility of the vehicle colliding with adjacent vehicles during the process of entering the parking space. At this time, the degree to which the distance from adjacent vehicles during the parking process can be tolerated may differ depending on the driver's skill level. When adjusting parameters of the autonomous parking function based on information collected from sensor 110, controller 120 may calculate the minimum size of parking space that the driver can accept and the safe minimum distance from adjacent vehicles during the parking process to optimize control of the autonomous parking function. This will be described in detail through FIGS. 4 to 9 and FIGS. 11 to 16 later.

Controller 120 may perform the autonomous parking function based on already set parameters when the usage frequency of the vehicle's autonomous parking function exceeds a predetermined criterion.

Steering system 130 may determine the steering angle of the steering wheel. Steering system 130 may include a steering wheel, steering column, steering gear device, power steering system, and the like. Steering system 130 may be controlled by controller 120, and may adjust the steering angle of vehicle 100 based on information input by controller 120.

Braking system 140 may decelerate vehicle 100 or maintain a stopped state. Braking system 140 may include a brake pedal, power transmission device, hydraulic transmission path device, and the like. Braking system 140 may be controlled by controller 120, and controller 120 may determine the braking torque of braking system 140 based on input information such as brake pedal operation amount or required braking torque.

Powertrain 150 may apply power to the driving wheels of vehicle 100. Powertrain 150 may include an internal combustion engine, electric motor, transmission, and the like. Powertrain 150 may be controlled by controller 120, and controller 120 may determine the driving torque of vehicle 100 based on input information such as accelerator pedal operation amount or required torque.

Controller 120 may control steering system 130, braking system 140, and powertrain 150 to control the behavior of vehicle 100 at each parking stage when vehicle 100 performs the autonomous parking function.

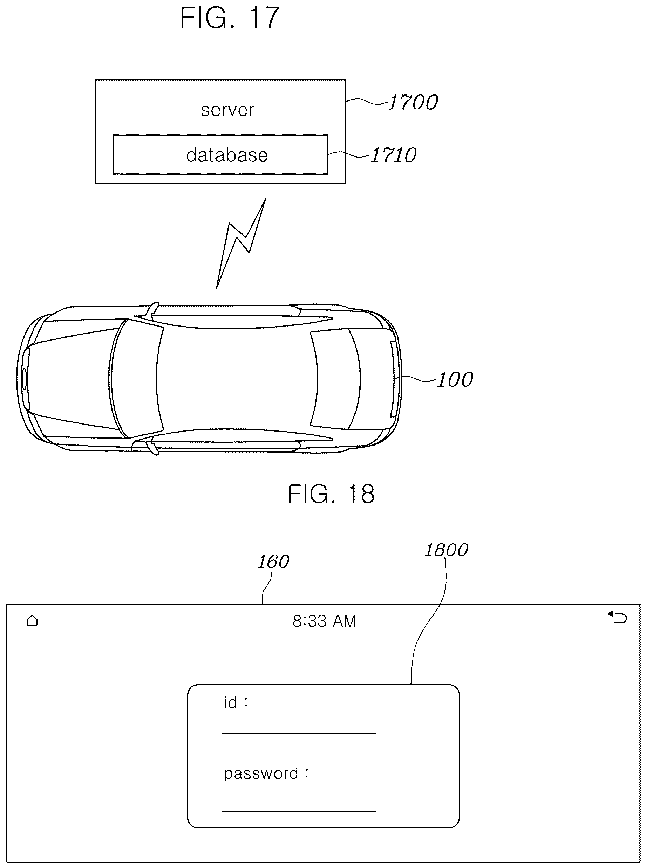

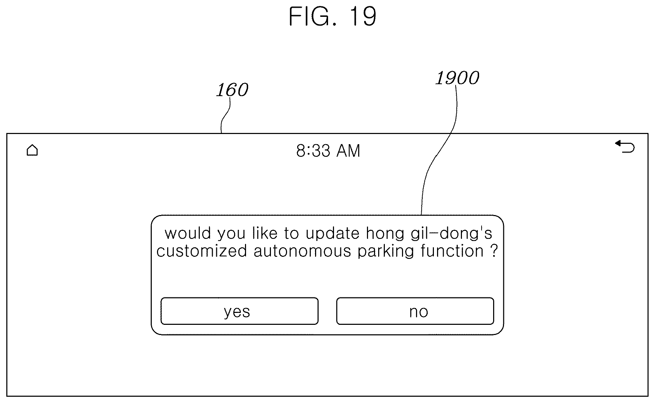

Controller 120 may analyze surrounding environment information collected from sensor 110 to search for parking spaces, determine the parkability of the searched corresponding space, and provide this visually to the driver through display 160. In addition, controller 120 may execute a Connected Car Service function to retrieve control parameters of the autonomous parking function set for each individual from an external server (not shown). The process of controller 120 retrieving control parameters of the autonomous parking function set for each individual may be accomplished by receiving input of an id and password through display 160, for example, a touch screen, but this is exemplary and is not necessarily limited thereto. **In** addition, when controller 120 provides an alarm to the driver about whether to use the changed parameters before adjusting the control parameters of the autonomous parking function, it may also be accomplished through display 160. The form in which visual information is provided through display 160 will be described in more detail through FIGS. 18 and 19 to be described later.

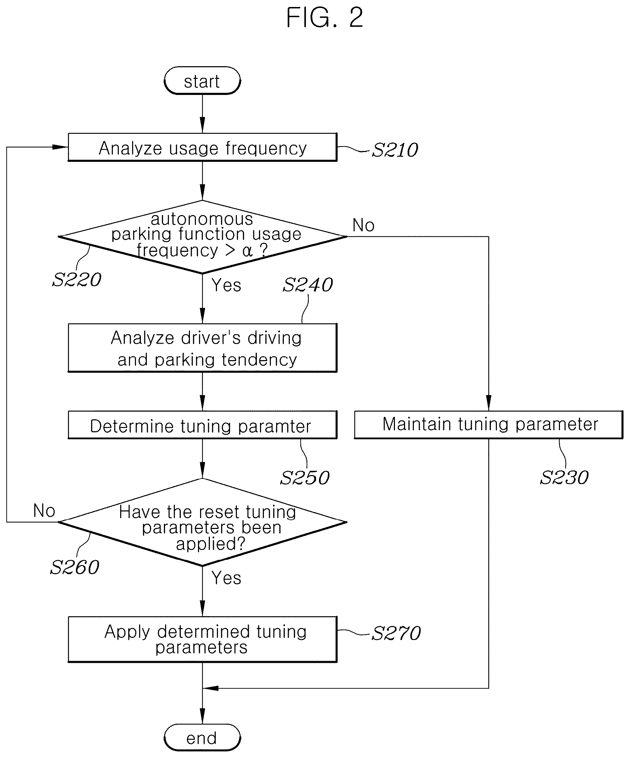

FIG. 2 shows a flowchart for adjusting control parameters of an autonomous parking function according to one embodiment of the present disclosure.

Referring to FIG. 2, first, controller 120 analyzes the driver's autonomous parking function usage frequency in step S210. Controller 120 may analyze the autonomous parking function usage frequency in real time or determine whether to analyze the usage frequency according to the driver's setting, which is exemplary and is not necessarily limited thereto. **In** addition, the autonomous parking function usage frequency may be represented as a ratio of the number of times the autonomous parking function was used to the total number of parking times, but this is also exemplary and is not necessarily limited thereto.

Controller 120 may compare the driver's autonomous parking function usage frequency with a predetermined criterion in step S220. In one embodiment of the present disclosure, the predetermined criterion may be the average number of times autonomous parking function users stored on an external server used the autonomous parking function, but this is exemplary and is not necessarily limited thereto.

If the driver's autonomous parking function usage frequency exceeds the predetermined criterion (Yes in step S220), controller 120 may maintain previously set parameters in step S230.

If the driver's autonomous parking function usage frequency is below the predetermined criterion (No in step S220), controller 120 may analyze the driver's driving and parking tendency in step S240. Analyzing the driver's driving tendency may mean that controller 120 analyzes the driver's rapid acceleration and rapid braking speed, vehicle speed during driving, steering operation speed, etc., based on the driver's vehicle operation information collected from sensor 110.

Controller 120 may determine parameters necessary for autonomous parking function control based on the analyzed driver's driving tendency in step S250. For example, when the driver's usual steering control speed is higher than a predetermined steering control speed, the increase amount may be determined to make the adjusted steering control speed closer to the driver's usual steering control speed by increasing by a certain ratio (% unit) based on the preset steering control speed. However, in this case, to prevent the steering control speed from increasing excessively, the increase amount may be limited so that the adjusted steering control speed does not exceed a preset maximum value. Parameters such as the driver's rapid acceleration and rapid braking speed, vehicle speed during driving, parking space size, etc., may also be determined in the same manner as steering control speed.

Controller 120 may inform the driver whether to replace the control parameters of the autonomous parking function set for each driver with the new parameters determined through the process described above in step S260. At this time, controller 120 may provide an alarm through an output device such as display 160.

If the driver does not want to change to the parameters determined by controller 120 (No in step S260), controller 120 may analyze the driver's autonomous parking function usage frequency again in step S210. If the driver wants to change to the parameters determined by controller 120 (Yes in step S260), controller 120 may replace the control parameters of the autonomous parking function stored in the driver's account with the parameters determined through the process described above in step S270.

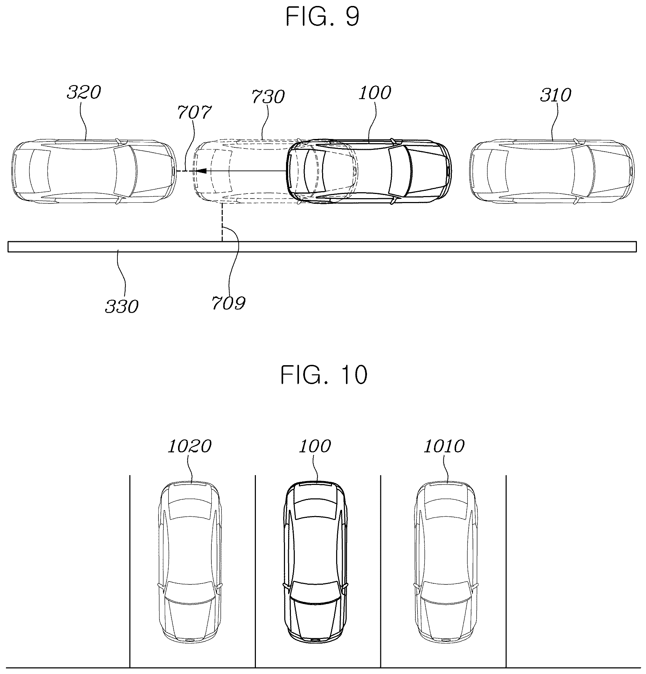

The content to be described below assumes that the driver's autonomous parking function usage frequency is below a predetermined criterion. FIGS. 3 and 10 show forms when vehicle 100 according to one embodiment of the present disclosure performs parallel parking and perpendicular parking among parking types, but this is exemplary and parking types are not necessarily limited thereto.

FIG. 3 illustrates an example of parallel parking among parking types according to one embodiment of the present disclosure.

Referring to FIG. 3, parallel parking is a type in which vehicle 100 is arranged in a line parallel to previously parked vehicles, and may mean a form arranged between the rear and front of front and rear vehicles 310, 320 when parking. There may be structure 330 on the side of vehicle 100, but this is exemplary and is not necessarily limited thereto.

FIGS. 4 to 6 show an example of a process in which vehicle 100 performs forward parking during parallel parking according to one embodiment of the present disclosure.

Referring to FIG. 4, in the case of forward parking, first, the front section of vehicle 100 may enter first section 410. First section 410 is not a section where parking is finally completed, but may be an intermediate section moving to the final section. When vehicle 100 enters first section 410, distance 401 from vehicle 310 located in front of first section 410 may vary depending on the driver's skill level. In addition, when there is structure 330 on the side of first section 410, distance 403 between first section 410 and structure 330 may also vary depending on the driver's skill level. Controller 120 may determine the aforementioned distances 401, 403 based on vehicle 100 surrounding environment information collected from sensor 110 during the process of vehicle 100 entering first section 410.

While vehicle 100 enters first section 410, the speed of vehicle 100 may differ depending on the driver, and the number of rapid accelerations and rapid brakings while reaching first section 410 may also differ. In addition, during the process of reaching first section 410, vehicle 100 may move through multiple steering operation changes according to the driver's tendency rather than arriving at first section 410 at once. Therefore, controller 120 may determine the aforementioned vehicle 100 speed, number of rapid accelerations and rapid brakings, number of steering operation changes, and steering operation speed based on vehicle 100 operation information collected from sensor 110 during the process of vehicle 100 entering first section 410.

Therefore, controller 120 may determine parameters suitable for the driver's tendency during the process of vehicle 100 entering first section 410.

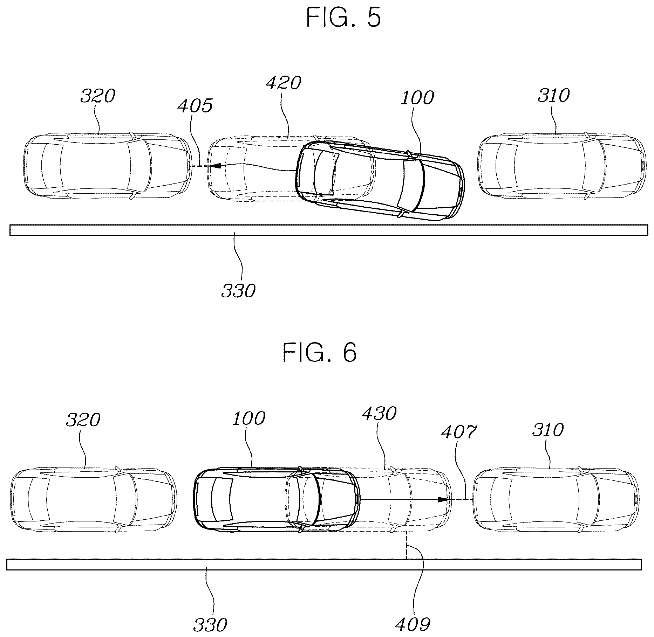

Referring to FIG. 5, vehicle 100 has reached first section 410 and may reverse to move to second section 420. Similarly, during the process of vehicle 100 moving to second section 420, the speed of vehicle 100, number of steering operation changes, steering operation speed, number of rapid accelerations and rapid brakings may differ depending on the driver. In particular, distance 405 between second section 420 and vehicle 320 at the rear of second section 420 may also differ depending on the driver's skill level. Therefore, control parameters of the autonomous parking function determined by controller 120 based on information collected from sensor 110 while vehicle 100 moves to second section 420 may differ for each driver.

Referring to FIG. 6, vehicle 100 has reached second section 420 and may move forward to move to third section 430, which is the final parking position. Similarly, during the process of vehicle 100 moving to third section 430, the speed of vehicle 100, number of steering operation changes, steering operation speed, number of rapid accelerations and rapid brakings may differ depending on the driver. In particular, distance 407 between third section 430 and vehicle 310 in front of third section 430 and, when there is structure 330, distance 409 between third section 430 and structure 330 may also differ depending on the driver's skill level. Therefore, control parameters of the autonomous parking function determined by controller 120 based on information collected from sensor 110 while vehicle 100 moves to third section 430 may differ for each driver.

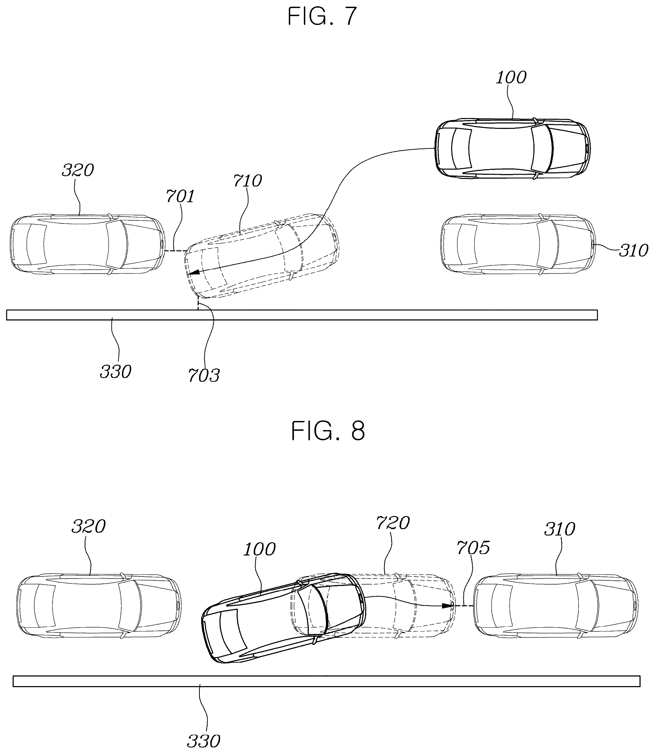

FIGS. 7 to 9 show an example of a process in which vehicle 100 performs reverse parking during parallel parking according to one embodiment of the present disclosure.

Referring to FIG. 7, in the case of reverse parking, first, the rear section of vehicle 100 may enter first section 710. First section 710 is not a section where parking is finally completed, but may be an intermediate section moving to the final section. When vehicle 100 enters first section 710, distance 701 from vehicle 320 located at the rear of first section 710 may vary depending on the driver's skill level. In addition, when there is structure 330 on the side of first section 710, distance 703 between first section 710 and structure 330 may also vary depending on the driver's skill level. Controller 120 may determine the aforementioned distances 701, 703 based on vehicle 100 surrounding environment information collected from sensor 110 during the process of vehicle 100 entering first section 710.

During the process of vehicle 100 entering first section 710, the speed of vehicle 100, number of rapid accelerations and rapid brakings, number of steering operation changes and speed may differ for each driver. Therefore, controller 120 may determine the aforementioned vehicle 100 speed, number of rapid accelerations and rapid brakings, number of steering operation changes, and steering operation speed based on vehicle 100 operation information collected from sensor 110 during the process of vehicle 100 entering first section 710.

Referring to FIG. 8, vehicle 100 has reached first section 710 and may move forward to move to second section 720. Similarly, during the process of vehicle 100 moving to second section 720, the speed of vehicle 100, number of steering operation changes, steering operation speed, number of rapid accelerations and rapid brakings may differ depending on the driver. In particular, distance 705 between second section 720 and vehicle 310 in front of second section 720 may also differ depending on the driver's skill level. Therefore, control parameters of the autonomous parking function determined by controller 120 based on information collected from sensor 110 while vehicle 100 moves to second section 720 may differ for each driver.

Referring to FIG. 9, vehicle 100 has reached second section 720 and may reverse to move to third section 730, which is the final parking position. Similarly, during the process of vehicle 100 moving to third section 730, the speed of vehicle 100, number of steering operation changes, steering operation speed, number of rapid accelerations and rapid brakings may differ depending on the driver. In particular, distance 707 between third section 730 and vehicle 320 at the rear of third section 730 and, when there is structure 330, distance 709 between third section 730 and structure 330 may also differ depending on the driver's skill level. Therefore, control parameters of the autonomous parking function determined by controller 120 based on information collected from sensor 110 while vehicle 100 moves to third section 730 may differ for each driver.

FIG. 10 illustrates an example of perpendicular parking among parking types according to one embodiment of the present disclosure.

Referring to FIG. 10, perpendicular parking is a method in which vehicle 100 is arranged in a line parallel to previously parked vehicles like parallel parking, but may mean a form arranged between already parked vehicles 1010, 1020 when parking.

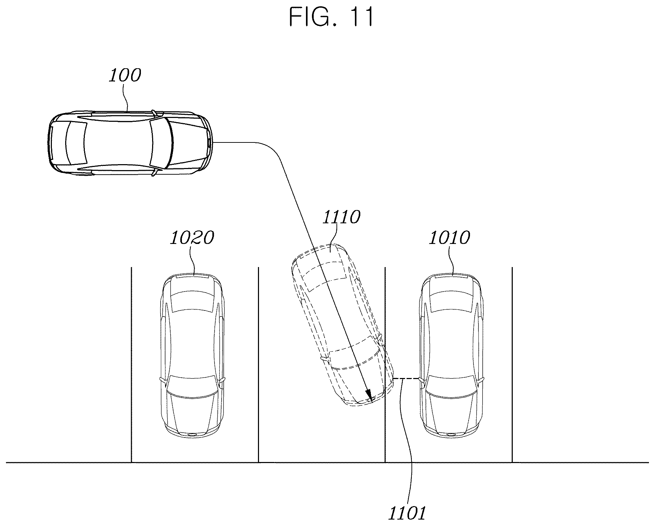

FIGS. 11 to 13 show an example of a process in which vehicle 100 performs forward parking during perpendicular parking according to one embodiment of the present disclosure.

Referring to FIG. 11, in the case of forward parking, first, the front section of vehicle 100 may enter first section 1110. First section 1110 is not a section where parking is finally completed, but may be an intermediate section moving to the final section. When vehicle 100 enters first section 1110, distance 1101 from vehicle 1010 located on the side of first section 1110 may vary depending on the driver's skill level. Controller 120 may determine distance 1101 between first section 1110 and vehicle 1010 based on vehicle 100 surrounding environment information collected from sensor 110 during the process of vehicle 100 entering first section 1110.

While vehicle 100 enters first section 1110, the speed of vehicle 100, number of rapid accelerations and rapid brakings, number of steering operation changes and speed may differ for each driver. In addition, during the process of reaching first section 1110, vehicle 100 may move through multiple steering operation changes according to the driver's tendency rather than arriving at first section 1110 at once. Therefore, controller 120 may determine the speed of vehicle 100, number of rapid accelerations and rapid brakings, number of steering operation changes, and steering operation speed based on vehicle 100 operation information collected from sensor 110 during the process of vehicle 100 entering first section 1110.

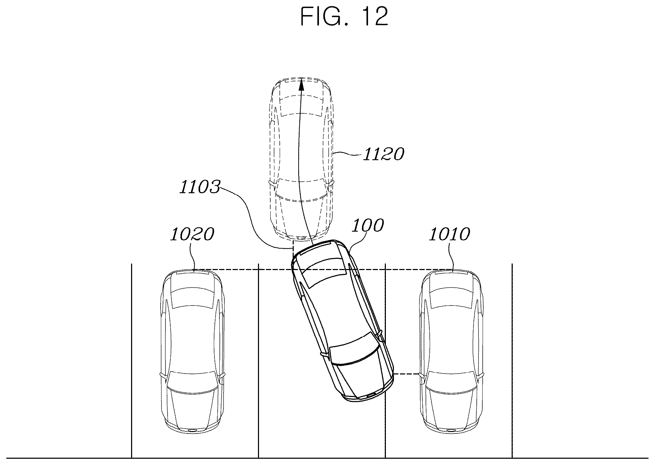

Referring to FIG. 12, vehicle 100 has reached first section 1110 and may reverse to move to second section 1120. Similarly, during the process of vehicle 100 moving to second section 1120, the speed of vehicle 100, number of steering operation changes, steering operation speed, number of rapid accelerations and rapid brakings may differ depending on the driver. In particular, perpendicular distance 1103 between second section 1120 and the line connecting the rear edges of both side vehicles 1010, 1020 may differ for each driver. Therefore, control parameters of the autonomous parking function determined by controller 120 based on information collected from sensor 110 while vehicle 100 moves to second section 1120 may differ for each driver.

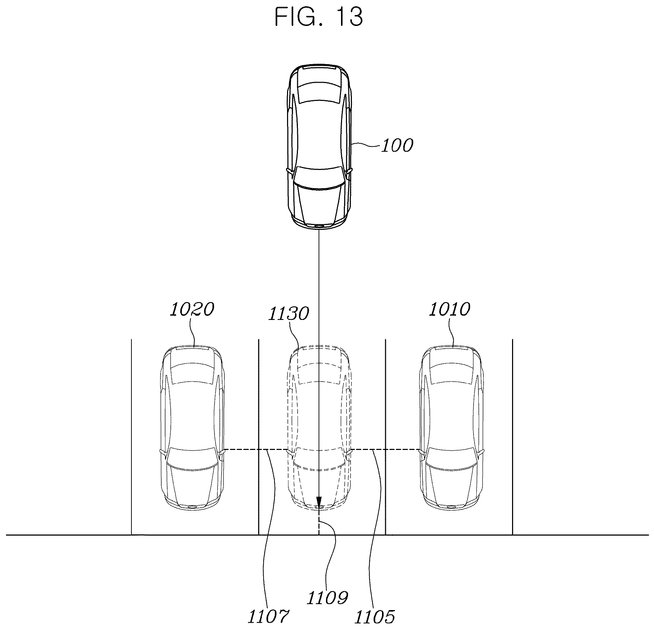

Referring to FIG. 13, vehicle 100 has reached second section 1120 and may move forward to move to third section 1130, which is the final parking position. Similarly, during the process of vehicle 100 moving to third section 1130, the speed of vehicle 100, number of steering operation changes, steering operation speed, number of rapid accelerations and rapid brakings may differ depending on the driver. In particular, distances 1105, 1107 between third section 1130 and vehicles 1010, 1020 located on both sides may differ for each driver. For example, when the driver drives alone most of the driving time, since there is no passenger in the passenger seat, the distance from the side vehicle in the passenger seat side vehicle exit direction may be shortened. That is, distances 1105, 1107 on both sides may be the same or different, and this may differ depending on the driver's tendency. In addition, distance 1109 from the parking line in front of third section 1130 may also differ for each driver. Therefore, control parameters of the autonomous parking function determined by controller 120 based on information collected from sensor 110 while vehicle 100 moves to third section 1130 may differ for each driver.

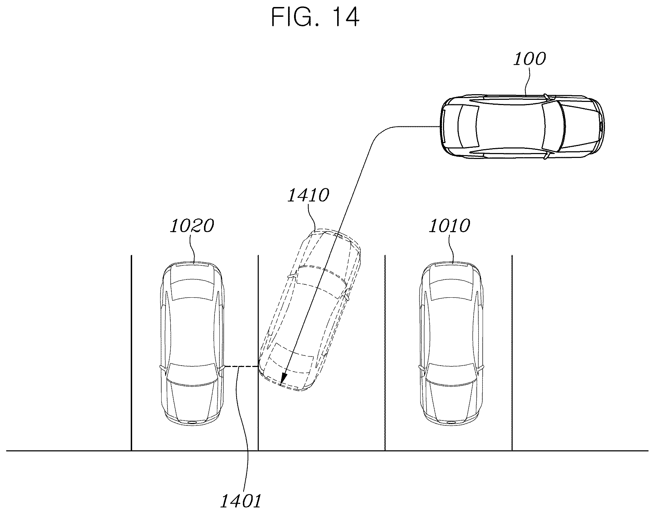

FIGS. 14 to 16 show an example of a process in which vehicle 100 performs reverse parking during perpendicular parking according to one embodiment of the present disclosure.

Referring to FIG. 14, in the case of reverse parking, first, the rear section of vehicle 100 may enter first section 1410. First section 1410 is not a section where parking is finally completed, but may be an intermediate section moving to the final section. When vehicle 100 enters first section 1410, distance 1401 from vehicle 1020 located on the side of first section 1410 may vary depending on the driver's skill level. Controller 120 may determine distance 1401 between first section 1410 and vehicle 1020 based on vehicle 100 surrounding environment information collected from sensor 110 during the process of vehicle 100 entering first section 1410.

While vehicle 100 enters first section 1410, the speed of vehicle 100, number of rapid accelerations and rapid brakings, number of steering operation changes and speed may differ for each driver. **In** addition, during the process of reaching first section 1410, vehicle 100 may move through multiple steering operation changes according to the driver's tendency rather than arriving at first section 1410 at once. Therefore, controller 120 may determine the speed of vehicle 100, number of rapid accelerations and rapid brakings, number of steering operation changes, and steering operation speed based on vehicle 100 operation information collected from sensor 110 during the process of vehicle 100 entering first section 1410.

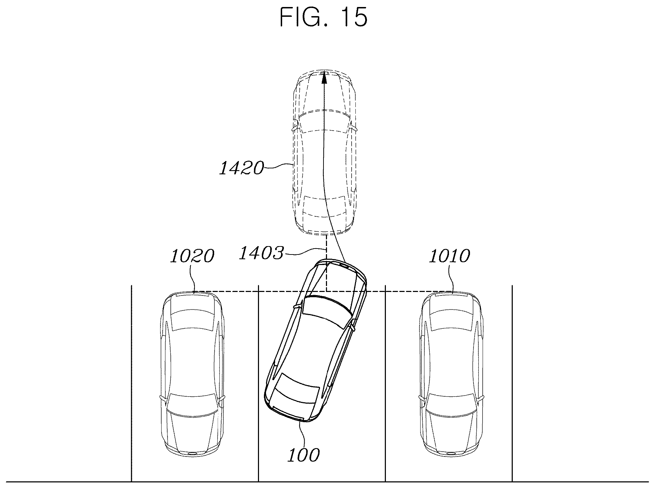

Referring to FIG. 15, vehicle 100 has reached first section 1410 and may reverse to move to second section 1420. Similarly, during the process of vehicle 100 moving to second section 1420, the speed of vehicle 100, number of steering operation changes, steering operation speed, number of rapid accelerations and rapid brakings may differ depending on the driver. In particular, perpendicular distance 1403 between second section 1420 and the line connecting the rear edges of both side vehicles 1010, 1020 may differ for each driver. Therefore, control parameters of the autonomous parking function determined by controller 120 based on information collected from sensor 110 while vehicle 100 moves to second section 1420 may differ for each driver.

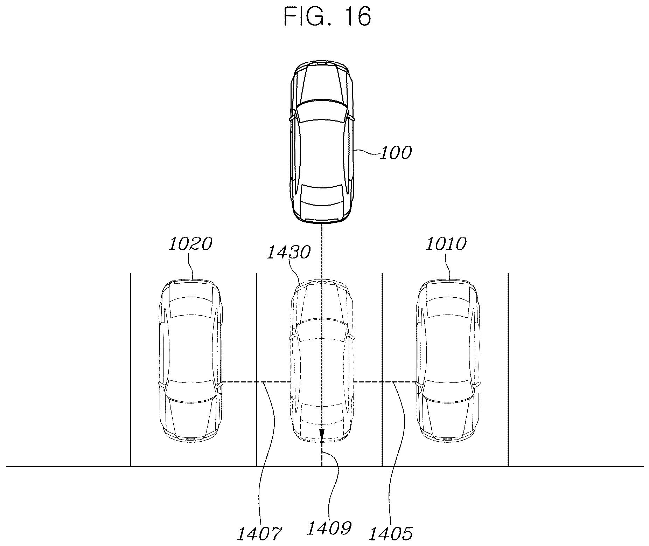

Referring to FIG. 16, vehicle 100 has reached second section 1420 and may reverse to move to third section 1430, which is the final parking position. Similarly, during the process of vehicle 100 moving to third section 1430, the speed of vehicle 100, number of steering operation changes, steering operation speed, number of rapid accelerations and rapid brakings may differ depending on the driver. In particular, distances 1405, 1407 between third section 1430 and vehicles 1010, 1020 located on both sides may differ for each driver. In addition, distance 1409 from the parking line at the rear of third section 1430 may also differ for each driver. Therefore, control parameters of the autonomous parking function determined by controller 120 based on information collected from sensor 110 while vehicle 100 moves to third section 1430 may differ for each driver.

Therefore, as described in FIGS. 4 to 9 and FIGS. 10 to 16, when controller 120 has determined parameters for each situation, the autonomous parking function may be controlled based on the determined parameters, and the above situation is exemplary and is not limited thereto.

FIG. 17 shows an example of an environmental configuration in which vehicle 100 retrieves control parameters of an autonomous parking function set for each individual from external server 1700 according to one embodiment of the present disclosure.

Referring to FIG. 17, server 1700 may include database 1710. In one embodiment of the present disclosure, control parameters of the autonomous parking function corresponding to each driver's account connected to server 1700 may be stored in database 1710.

When the driver on board logs in with an account linked to server 1700, vehicle 100 may retrieve control parameters of the autonomous parking function stored in the corresponding account and perform the autonomous parking function through controller 1720. For example, in one embodiment of the present disclosure, the process of controller 120 retrieving control parameters of the autonomous parking function set for each individual may be accomplished by receiving input of an id and password through display 160, for example, a touch screen, and when the driver logs in with a unique account as described above, the connected car service may be used. Server 1700 providing the connected car service may transmit control parameters of the autonomous parking function corresponding to the logged-in account to controller 120. When the driver's autonomous parking function usage frequency is below a predetermined criterion, controller 120 may redetermine parameters of the autonomous parking function according to the flowchart described above through FIG. 2, may replace parameters stored in the driver's account with redetermined parameters according to the driver's choice, and the replaced parameters may be stored in database 1710.

FIG. 18 shows an example of a form for inputting an id and password for connecting to a Connected Car Service through display 160 according to one embodiment of the present disclosure.

Display 160 may be a touch screen, and the driver may input an id and password through touch, but this is exemplary and is not necessarily limited thereto. When the driver logs into the account, controller 120 may perform the autonomous parking function based on control parameters of the autonomous parking function linked to the logged-in account.

FIG. 19 shows an example of a form for guiding whether to replace control parameters of an autonomous parking function with adjusted parameters through display 160 according to one embodiment of the present disclosure.

Controller 120 may reset control parameters of the autonomous parking function based on information collected from sensor 110. The driver may be guided on whether to replace with changed parameters through guidance window 1900 as shown in FIG. 19. When the driver wants replacement, the "Yes" button may be selected to reflect this, but this is exemplary and is not necessarily limited thereto.

Therefore, in one embodiment of the present disclosure, vehicle 100 may provide a customized autonomous parking function for each driver by controller 120 based on information collected from sensor 110. In addition, by improving the reliability of the autonomous parking function, it is expected that the utilization of the autonomous parking function will increase publicly.

Meanwhile, the present disclosure described above can be implemented as computer-readable code on a medium on which a program is recorded. Computer-readable media include all kinds of recording devices that store data that can be read by computer systems. Examples of computer-readable media include HDD (Hard Disk Drive), SSD (Solid State Disk), SDD (Silicon Disk Drive), ROM, RAM, CD-ROM, magnetic tape, floppy disk, optical data storage device, and the like. Therefore, the above detailed description should not be construed as limiting in all respects and should be considered exemplary. The scope of the present disclosure should be determined by reasonable interpretation of the appended claims, and all changes within the equivalent scope of the present disclosure are included in the scope of the present disclosure.

## Claims

1. A vehicle for performing autonomous parking function, the vehicle comprising:
a sensor configured to determine driver's vehicle operation information and vehicle behavior based on the vehicle operation information; and
a controller configured to:
determine the driver's driving pattern using information obtained through the sensor based on usage frequency of an autonomous parking function that controls a parking process without the driver's intervention; and
adjust vehicle control parameters for the autonomous parking function based on the determined pattern.

2. The vehicle according to claim 1, wherein the controller is further configured to adjust the vehicle control parameters to approach the determined pattern based on the autonomous parking function usage frequency being below a predetermined criterion.

3. The vehicle according to claim 1, or 2, wherein the controller is further configured to maintain the vehicle control parameters based on the autonomous parking function usage frequency exceeding a predetermined criterion.

4. The vehicle according to claim 1, 2, or 3, wherein the vehicle control parameters comprise at least one of steering control speed of the vehicle, magnitude of driving and braking control torque, an upper limit value of the vehicle speed during driving, parking type, a lower limit value of a distance between the vehicle and surrounding objects at each parking stage, a lower limit value of a size of a parking space for the vehicle, or any combination thereof.

5. The vehicle according to any one of claims 1 to 4, wherein the vehicle operation information comprises at least one of speed of the vehicle, acceleration of the vehicle, brake usage frequency of the driver, or information on steering operation patterns of the driver, or any combination thereof.

6. The vehicle according to any one of claims 1 to 5, wherein the controller is further configured to control the adjusted vehicle control parameters to be integrated with personalization settings of the vehicle for the driver.

7. The vehicle according to any one of claims 1 to 6, wherein the controller is further configured to control the autonomous parking function based on the adjusted vehicle control parameters.

8. A method of controlling autonomous parking function, the method comprising:
determining, by a controller, the driver's driving pattern using information obtained through a sensor which determines driver's vehicle operation information and vehicle behavior based on usage frequency of an autonomous parking function that controls a parking process without the driver's intervention; and
adjusting, by the controller, vehicle control parameters for the autonomous parking function based on the determined pattern.

9. The method according to claim 8, wherein the adjusting of the vehicle control parameters comprises:
adjusting, by the controller, the vehicle control parameters to approach the determined pattern based on the autonomous parking function usage frequency being below a predetermined criterion.

10. The method according to claim 8, or 9, wherein the adjusting of the vehicle control parameters comprises:
maintaining, by the controller, the vehicle control parameters based on the autonomous parking function usage frequency exceeding a predetermined criterion.

11. A system for controlling autonomous parking function of a vehicle, the system comprising:
a sensor configured to:
obtain information based on usage frequency of an autonomous parking function that controls a parking process without the driver's intervention;
determine information related to a vehicle operation of a driver; and
determine vehicle behavior based on the determined information; and
a controller configured to:
determine a driving pattern of the driver by using the information obtained through the sensor; and
adjust vehicle control parameters for the autonomous parking function based on the determined pattern.

12. The system according to claim 11, wherein the controller is further configured to adjust the vehicle control parameters to approach the determined pattern based on the autonomous parking function usage frequency being below a predetermined criterion.

13. The system according to claim 11, or 12, wherein the controller is further configured to maintain the vehicle control parameters based on the autonomous parking function usage frequency exceeding a predetermined criterion.

14. The system according to claim 11, 12, or 13, wherein the vehicle control parameters comprise at least one of steering control speed of the vehicle, magnitude of driving and braking control torque, an upper limit value of the vehicle speed during driving, parking type, a lower limit value of a distance between the vehicle and surrounding objects at each parking stage, or a lower limit value of a size of a parking space for the vehicle, or any combination thereof.

15. The system according to any one of claims 11 to 14, wherein the vehicle operation information comprises at least one of speed of the vehicle, acceleration of the vehicle, brake usage frequency of the driver, or information on steering operation patterns of the driver, or any combination thereof.
